# DEMANDE DE BREVET EUROPEEN

(11) **EP 4 375 845 A1**
(43) Date de publication de la demande: **29.05.2024**
(21) Numéro de dépôt: 23209322.9
(22) Date de dépôt: 13.11.2023
(51) Int. Cl.: G06F 15/78

(54) **PROCÉDÉ DE GESTION DE L'ISOLATION DE RESSOURCES D'UN SYSTÈME SUR PUCE, ET SYSTÈME SUR PUCE CORRESPONDANT**

(30) Priorité: 25.11.2022 FR 2212348
(71) Demandeur: STMicroelectronics (Grand Ouest) SAS, 72100 Le Mans (FR)
(72) Inventeur: PALLARDY, Loic, 72700 ROUILLON (FR)
(74) Mandataire: Casalonga

(57) **Abrégé**

Le système sur puce (SOC) comporte au moins un dispositif maître (MSTR), au moins une ressource esclave (RES), un bus d'interconnexion (BUS) comportant un canal de notification d'erreur (RREP), et un système d'isolation des ressources (RIF) comportant, pour chaque ressource, un circuit de protection (RISUP) configuré pour bloquer ou transmettre des transactions adressées à la ressource par le bus d'interconnexion (BUS), en fonction de droits d'accès de la ressource et de la transaction. Le circuit de protection (RISUP) est capable de générer un signal de notification (ILAC_BUS) sur le canal de notification d'erreur (RREP) du bus d'interconnexion (BUS) en cas de blocage d'une transaction.

## Description

Des modes de mise en oeuvre et de réalisation de l'invention concernent les circuits intégrés, notamment les systèmes sur puce (« System on Chip » en anglais), par exemple un microcontrôleur ou un microprocesseur, et plus particulièrement les techniques d'isolation des ressources appartenant au système sur puce.

Afin de contribuer à garantir la fiabilité d'un système sur puce, des techniques d'isolation des ressources permettent de restreindre l'accès d'un ou de plusieurs dispositifs maîtres à des ressources esclaves spécifiques. On parle d'un accès « illégal » lorsqu'une transaction, émise par un dispositif maître vers une ressource esclave, n'est pas conforme aux restrictions d'accès établies.

Par exemple, la publication FR 3103586 A1 (28/05/2021) décrit une technique de gestion de ces restrictions d'accès simple à mettre en oeuvre et à implémenter, en particulier lorsque cette gestion est dynamique, c'est-à-dire qu'elle dépend de différentes applications du système sur puce.

Dans les techniques d'isolation des ressources conventionnelles, typiquement seul un « domaine de confiance », usuellement en charge de la gestion des restrictions et des droits d'accès, est informé d'un accès illégal à une ressource, par un mécanisme de gestion des accès illégaux.

Les détections des accès illégaux sont ainsi typiquement silencieuses, du point du vue du dispositif ayant émis la transaction en cause, car un accès illégal en écriture est typiquement ignoré, et un accès illégal en lecture reçoit typiquement un « 0 » pouvant être vu comme du contenu lu.

Cela peut engendrer des difficultés sur le débogage, étant donné qu'il est possible de savoir quelle ressource a été accédée de manière illégale, mais pas par quel contexte (c'est-à-dire par quel dispositif maître et/ou dans quels droits d'accès).

De plus, dans certains produits, il peut être souhaitable d'arrêter immédiatement un dispositif maître défaillant, ce qui n'est classiquement pas possible sans délai car le domaine de confiance doit d'abord traiter l'erreur avant de décider ce qui doit être fait.

Enfin, lorsque le dispositif maître défaillant n'est pas informé de l'erreur, il peut répéter la même erreur et risque de déstabiliser le système, par exemple en accumulant des mauvaises configurations dans des registres. Ce comportement peut ne pas être acceptable dans certaines situations.

Ainsi, il existe un besoin de remédier aux problèmes susmentionnés, en particulier de proposer une solution permettant de notifier immédiatement le dispositif maître concerné par l'erreur d'accès illégal, et d'identifier le contexte, voire la ligne de code, qui a engendré l'erreur d'accès illégal.

En outre, il existe un besoin que les solutions de gestion des accès illégaux soient paramétrables, par exemple par un utilisateur, notamment afin de configurer le degré de précision dans la manière de notifier une détection d'un accès illégal.

Des modes de réalisation et de mise en oeuvre proposent à cet égard de générer un signal de notification, en cas d'accès illégal, directement transmis au dispositif maître concerné sur un canal de notification d'erreur d'un bus d'interconnexion du système sur puce.

En outre, des modes de réalisation et de mise en oeuvre prévoient de pouvoir sélectionner le comportement pour chaque ressource afin de décider si un accès illégal doit être silencieux ou causer la génération du signal de notification.

Selon un aspect, il est ainsi proposé un système sur puce comportant au moins un dispositif maître, au moins une ressource esclave, un bus d'interconnexion comportant un canal de notification d'erreur, et un système d'isolation des ressources comportant, pour chaque ressource, un circuit de protection configuré pour bloquer ou transmettre des transactions adressées à la ressource par le bus d'interconnexion, en fonction de droits d'accès de la ressource et de la transaction. Le circuit de protection est capable de générer un signal de notification sur le canal de notification d'erreur du bus d'interconnexion en cas de blocage d'une transaction.

Le circuit de protection est par exemple configuré pour adresser ledit signal de notification au dispositif maître à l'origine de ladite transaction bloquée.

Le bus d'interconnexion est par exemple un système couplé entre les dispositifs maîtres et les ressources esclaves qui permet de router des transactions, par exemple des transactions d'écriture ou de lecture, entre les dispositifs maîtres et les ressources esclaves.

Par exemple, le signal de notification communiqué sur le canal de notification d'erreur du bus d'interconnexion, peut être prévu pour engendrer une réaction, avantageusement immédiate, du dispositif maître à l'origine de la transaction bloquée.

La réaction du dispositif maître peut comprendre une interruption du transfert de donnée en cours, et/ou un arrêt de processus en cours (à l'origine de l'accès illégal) en forçant une génération d'exception d'abandon de données.

La réaction du dispositif maître peut avantageusement permettre de récupérer l'adresse qui a engendré l'accès illégal. En particulier, la génération forcée de l'exception d'abandon de donnée peut en effet permettre d'identifier l'adresse qui a généré l'exception d'abandon de données. Par exemple des processus gestionnaires d'abandon de données peuvent usuellement être prévus pour des niveaux de droits d'accès respectifs (par exemple non-sécurisé et sécurisé).

L'utilisation (ou la réutilisation) du canal de notification d'erreur existant sur le bus d'interconnexion par le circuit de protection, permet en outre d'éviter de multiplier les fils de connexion dédiés au système d'isolation des ressources. On notera en particulier que c'est le circuit de protection qui est capable d'utiliser ledit canal de notification d'erreur du bus, et non la ressource. C'est en effet en cas de blocage d'une transaction, et donc pour une ressource ignorant totalement l'existence de cette transaction, que le circuit de protection est capable de générer un signal de notification sur le canal de notification d'erreur du bus. Ainsi, le canal de notification d'erreur du bus est par exemple « surchargé » par le circuit de protection, en outre de la ressource, du fait que le circuit de protection est capable d'utiliser ce canal indépendamment de la ressource, alors que ce canal peut être normalement prévu pour être utilisé par la ressource indépendamment du circuit de protection.

Selon un mode de réalisation, le système d'isolation des ressources comporte, dans un jeu de registres de configuration, pour chaque ressource un emplacement pour contenir une donnée de paramétrage des notifications, le circuit de protection de chaque ressource étant configuré pour générer ou non ledit signal de notification en cas de blocage d'une transaction adressée à la ressource, en fonction de la donnée de paramétrage des notifications pour cette ressource.

Ainsi, le degré de précision supplémentaire dans la détection des accès illégaux, obtenu par le signal de notification sur le canal de notification d'erreur du bus, peut être activé ou désactivé en fonction des besoins en matière d'isolation des ressources, par exemple choisis par un utilisateur. En effet, pour chaque ressource et en fonction de l'utilisation d'un produit, il peut être souhaitable de bénéficier d'une grande maîtrise et d'une haute sécurité et ainsi d'activer le signal de notification en cas de blocage d'une transaction ; ou bien à l'inverse, de privilégier la simplicité et/ou la performance et désactiver ce signal pour ne pas utiliser le canal de notification d'erreur du bus ni interrompre le dispositif maître.

Selon un mode de réalisation, le système sur puce comporte un dispositif maître de confiance, et le système d'isolation des ressources comporte une unité de gestion centrale capable de générer un signal d'interruption adressé au dispositif maître de confiance, en cas de blocage d'une transaction par l'un quelconque dudit au moins un circuit de protection.

En effet, l'usage du signal de notification sur le canal de notification d'erreur du bus d'interconnexion est compatible en combinaison avec une gestion centrale des accès illégaux utilisant une interruption transmise au dispositif maître de confiance.

Selon un mode de réalisation, le système d'isolation des ressources comporte, dans un jeu de registres de configuration, pour chaque ressource, un emplacement prévu pour contenir une donnée de paramétrage des interruptions, l'unité de gestion centrale étant configurée pour générer ou non ledit signal d'interruption en cas de blocage d'une transaction adressée à une ressource, en fonction de la donnée de paramétrage des interruptions pour cette ressource.

Ainsi, là encore le signal d'interruption peut être activé ou désactivé en fonction des besoins en matière d'isolation des ressources, par exemple choisis par un utilisateur.

Et, en combinaison avec la donnée de paramétrage des notifications, le système sur puce peut comporter quatre niveaux de précision dans la détection des accès illégaux, pouvant être sélectionnés, par exemple par un utilisateur, en fonction des besoins en matière d'isolation des ressources.

Selon un autres aspect, il est également proposé un procédé de gestion de l'isolation de ressources d'un système sur puce, dans lequel :
- le système sur puce comprend au moins un dispositif maître, au moins une ressource esclave, et un bus d'interconnexion comportant un canal de notification d'erreur ; et
- le procédé comprend, pour chaque ressource, une mise en oeuvre d'une protection comprenant un blocage ou une transmission de transactions adressées à la ressource par le bus d'interconnexion, en fonction de droits d'accès de la ressource et de la transaction, et une génération d'un signal de notification sur le canal de notification d'erreur du bus d'interconnexion en cas de blocage d'une transaction.

Selon un mode de mise en oeuvre, ledit signal de notification est adressé au dispositif maître à l'origine de ladite transaction bloquée.

Selon un mode de mise en oeuvre, une donnée de paramétrage des notifications, pour chaque ressource, est contenue dans un jeu de registres de configuration, et ledit signal de notification est généré ou non en cas de blocage d'une transaction adressée à une ressource, en fonction de la donnée de paramétrage des notifications pour cette ressource.

Selon un mode de mise en oeuvre, le système sur puce comporte un dispositif maître de confiance, et le procédé comprend une génération d'un signal d'interruption adressé au dispositif maître de confiance, en cas de blocage d'une transaction adressé à l'une quelconque de ladite au moins une ressource.

Selon un mode de mise en oeuvre, pour chaque ressource, une donnée de paramétrage des interruptions est contenue dans un jeu de registres de configuration, et ledit signal d'interruption est généré ou non en cas de blocage d'une transaction adressée à une ressource, en fonction de la donnée de paramétrage des interruptions pour cette ressource.

D'autres avantages et caractéristiques de l'invention apparaîtront à l'examen de la description détaillée de modes de réalisation et de mise en oeuvre, nullement limitatifs, et des dessins annexés, sur lesquels les figures :
[Fig 1] et
[Fig 2] et
[Fig 3] et
[Fig 4] illustrent des modes de réalisation et de mise en oeuvre de l'invention.

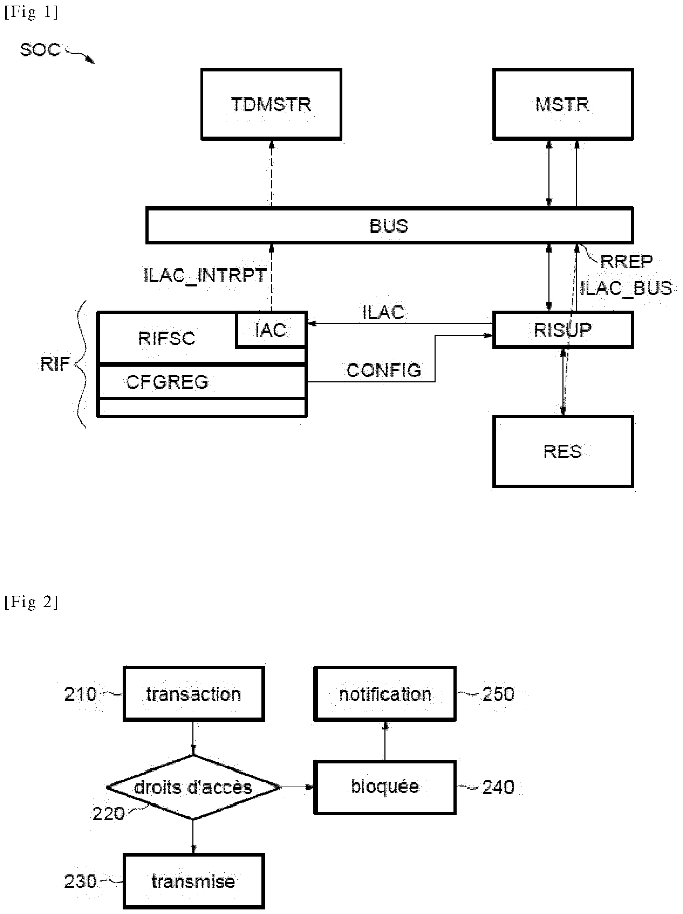

La figure 1 illustre schématiquement un exemple de réalisation d'un système sur puce SOC, tel que par exemple un microcontrôleur ou un microprocesseur, comportant au moins un dispositif maître MSTR, et au moins une ressource esclave RES pouvant communiquer via un bus d'interconnexion BUS.

Les dispositifs maîtres TDMSTR, MSTR peuvent par exemple être des processeurs ou des unités centrales de calculs « CPU » (pour « Central Processing Unit » en anglais), adaptés pour mettre en oeuvre des fonctionnalités logicielles ; ou bien d'autres dispositifs maîtres tels que des moyens d'accès direct en mémoire « DMA » (pour « Direct Memory Access » en anglais).

Dans cet exemple, le système sur puce SOC comporte en outre un dispositif maître TDMSTR qualifié « de confiance », en particulier en charge de la configuration et de la gestion de droits d'accès définissant les règles d'isolation, mises en place par un système d'isolation des ressources RIF décrit plus en détails ci-après.

Les ressources peuvent par exemple comprendre un périphérique du type I2C (pour « Inter Integrated Circuit » en anglais), du type SPI (pour « Serial Peripheral Interface » en anglais), du type UART (pour « Universal Asynchronous Receiver Transmitter » en anglais), du type horloge temps réel « RTC » (pour « Real Time Clock » en anglais), ou bien du type mémoire tel qu'une mémoire interne au système sur puce ou une interface pour mémoire externe au système sur puce.

Le bus d'interconnexion BUS est couplé entre les dispositifs maîtres et les ressources esclaves et permet de router des transactions, par exemple des transactions d'écriture ou de lecture, et plus généralement des informations, sur des canaux pouvant avoir des fonctionnalités dédiées, entre les dispositifs maîtres MSTR et les ressources esclaves RES.

Le bus d'interconnexion peut par exemple être un bus du type « AXI » pour « Advanced eXtensible Interface » en anglais, ou du type « AHB » pour « Advanced High-performance Bus » en anglais, qui sont des types de bus de microcontrôleur « AMBA » pour « Advanced Microcontroller Bus Architecture ».

En particulier, le bus d'interconnexion BUS comporte un canal de notification d'erreur RREP, par exemple prévu pour communiquer une information de réponse des ressources esclaves, suite à une réception d'une transaction en lecture ou en écriture. L'information de réponse peut être par exemple codée sur 2 bits, de manière à permettre une communication de 4 états différents. Par exemple, l'une des informations possibles RREP peut être prévue pour communiquer une notification d'erreur par une ressource esclave, en cas de transaction reçue avec succès mais qui n'est pas comprise par la ressource esclave.

Le système sur puce SOC comporte en outre un système d'isolation des ressources RIF configuré pour restreindre l'accès d'un ou de plusieurs dispositifs maîtres à des ressources esclaves spécifiques, notamment en fonction de droits d'accès définis à cet égard.

Par exemple, parmi les droits d'accès pouvant définir les règles d'isolation des ressources, on peut prévoir de définir des environnements privilégié et non-privilégié, et éventuellement cumulativement des environnements sécurisé et non-sécurisé, ainsi qu'éventuellement en outre un identifiant de compartimentation.

Les notions d'environnements et droits d'accès sécurisé/non-sécurisé et privilégié/non-privilégié sont bien connues de l'homme du métier, et la notion identifiant de compartimentation est notamment enseignée dans la publication FR 3103586 A1 (28/05/2021).

On parle d'un accès « illégal » lorsque les droits d'accès d'une transaction ne sont pas conformes à ceux de la ressource destinataire.

Par exemple, le système d'isolation des ressources RIF du système sur puce peut s'inscrire dans la technique d'isolation des ressources décrite dans la publication FR 3103586 A1 (28/05/2021).

Le système d'isolation des ressources RIF comporte en particulier pour chaque ressource RES, un circuit de protection RISUP (parfois appelé « pare-feu »), configuré pour bloquer ou transmettre des transactions adressées à la ressource RES par le bus d'interconnexion BUS, en fonction desdits droits d'accès de la ressource et de la transaction.

En outre, selon une caractéristique générale de la présente description, le circuit de protection RISUP est capable de générer un signal de notification ILAC_BUS sur le canal de notification d'erreur RREP du bus d'interconnexion BUS, en cas de blocage d'une transaction.

On se réfère à cet égard à la figure 2.

La figure 2 illustre le procédé 200 mis en oeuvre par le circuit de protection RISUP, dans la gestion de l'isolation de ressource RIF du système sur puce SOC décrit en relation avec la figure 1.

Ainsi, la mise en oeuvre de la protection 200 de chaque ressource, comprend, à la réception 210 d'une transaction en provenance du bus d'interconnexion BUS, une vérification 220 des droits d'accès de cette transaction vis-à-vis des droits d'accès de la ressource.

En fonction de la vérification 220, la transaction 210 peut être transmise 230 à la ressource RES en aval, ou bien bloquée 240 par le circuit de protection RISUP en amont.

Et, si la transaction est bloquée 240, le signal de notification ILAC_BUS est généré 250 sur le canal de notification d'erreur RREP du bus d'interconnexion BUS, par le circuit de protection RISUP.

On se réfère de nouveau à la figure 1.

Le signal de notification ILAC_BUS est avantageusement adressé au dispositif maître MSTR à l'origine de ladite transaction bloquée, par les mécanismes de routage du bus.

Par exemple, le signal de notification peut à cet égard être l'information, mentionnée précédemment, prévue pour communiquer sur le canal de notification d'erreur RREP une notification d'erreur de la ressource esclave, en cas de transaction reçue avec succès.

On notera que dans cet exemple, le canal de notification d'erreur RREP du bus est normalement prévu pour être utilisé par la ressource RES (tel que représenté par la flèche en trait interrompu), et non par le circuit de protection RISUP lui-même.

Or, dans ce cas, c'est bien le circuit de protection RISUP lui-même qui génère le signal de notification ILAC_BUS sur le canal de notification d'erreur du bus BUS. En effet, en cas de blocage 240 de la transaction, la ressource RES n'est pas informée de l'existence de cette transaction et n'est donc pas en mesure de générer le signal de notification ILAC_BUS.

Ainsi, le canal de notification d'erreur du bus RREP est dit « surchargé » puisqu'il est connecté et utilisable indépendamment par deux circuits distincts, à la fois par le circuit de protection RISUP et par la ressource RES.

L'utilisation, ou la « réutilisation », du canal de notification d'erreur RREP du bus d'interconnexion BUS par le circuit de protection RISUP, permet en particulier d'éviter d'introduire des fils de connexion supplémentaires pour le système d'isolation des ressources RIF.

Par ailleurs, le signal de notification ILAC_BUS peut être prévu pour engendrer une réaction, avantageusement immédiate, du dispositif maître MSTR à l'origine de la transaction bloquée.

La réaction du dispositif maître MSTR peut comprendre une interruption du transfert de donnée en cours, et/ou un arrêt de processus en cours (à l'origine de l'accès illégal) en forçant une génération d'exception d'abandon de données. La génération forcée de l'exception d'abandon de donnée permet avantageusement d'identifier l'adresse qui l'a générée, ce qui permet ainsi d'identifier l'adresse qui a généré l'accès illégal. Par exemple des processus gestionnaires d'abandon de données peuvent usuellement être prévus pour des niveaux de droits d'accès respectifs (par exemple respectivement non-sécurisé et sécurisé).

D'autre part, le système d'isolation des ressources RIF peut parallèlement être configuré pour générer un signal d'interruption ILAC_INTRPT adressé au dispositif maître de confiance TDMSTR, en cas de blocage d'une transaction par l'un quelconque des circuits de protection RISUP des différents périphériques (au moins un) du système sur puce SOC.

Le signal d'interruption ILAC_INTRPT peut par exemple être communiqué au dispositif maître de confiance TDMSTR par le mécanisme de routage du bus d'interconnexion BUS.

Le système d'isolation des ressources RIF peut à cet égard comporter une unité de gestion centrale des accès illégaux IAC, par exemple au sein d'un dispositif de commande du système d'isolation des ressources RIFSC.

Dans ce cas, les circuits de protection RISUP des ressources RES sont configurés pour générer un signal de détection d'un accès illégal ILAC (et/ou du blocage de la transaction correspondante) et le communiquer à l'unité de gestion centrale des accès illégaux IAC.

L'unité de gestion centrale des accès illégaux IAC est quant à elle configurée pour générer l'interruption ILAC_INTRPT adressée au dispositif maître de confiance TDMSTR, en cas de réception d'un signal de détection d'accès illégal ILAC communiqué par l'un quelconque des circuits de protection RISUP.

Par ailleurs, le système d'isolation des ressources RIF peut avantageusement comporter des registres de configuration CFGREG, par exemple au sein du dispositif de commande du système d'isolation des ressources RIFSC, aptes à contenir des informations de configuration CONFIG des éléments du système d'isolation des ressources RIF (notamment les circuits de protection RISUP et l'unité de gestion centrale IAC).

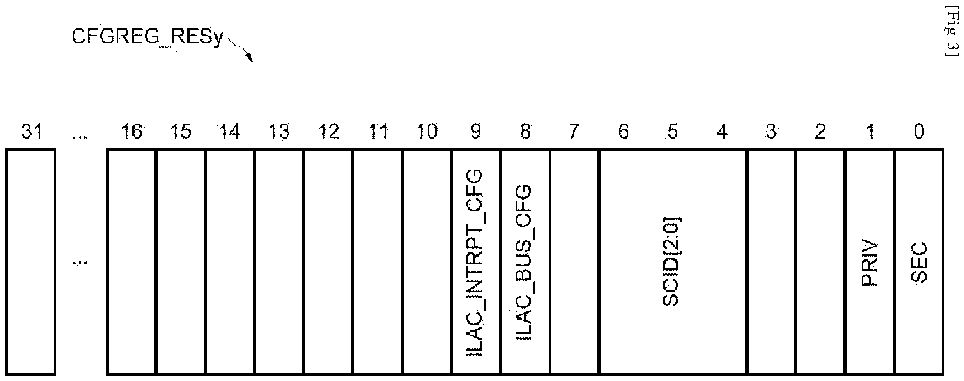

On se réfère à cet égard à la figure 3

La figure 3 illustre un exemple d'un registre de configuration CFGREG_RESy, respectivement dédié à une ressource « RESy » du système sur puce SOC.

Le registre de configuration CFGREG_RESy contient 32 emplacements « 0 » à « 31 » pour contenir des données de paramétrage relative à l'isolation des ressources, pour la ressource RES respective.

Par exemple et arbitrairement, l'emplacement « 0 » peut permettre de définir le droit d'accès SEC sécurisé ou non-sécurisé de la ressource, tandis que l'emplacement « 1 » peut permettre de définir le droit d'accès PRIV privilégié ou non-privilégié de la ressource.

Par exemple également, les emplacements « 4 » à « 6 » peuvent permettre de contenir l'identifiant de compartimentation de la ressource.

Dans un exemple de réalisation avantageux du système d'isolation des ressources RIF, le registre de configuration CFGREG_RESy contient un emplacement « 8 » prévu pour contenir une donnée de paramétrage des notifications ILAC_BUS_CFG.

La donnée de paramétrage des notifications ILAC_BUS_CFG permet d'activer ou désactiver (par exemple lorsqu'elle est enregistrée à la valeur « 1 », ou respectivement « 0 ») la fonctionnalité de notification d'accès illégal ILAC_BUS via le canal de notification d'erreur RREP du bus d'interconnexion BUS.

La valeur de la donnée de paramétrage des notifications ILAC_BUS_CFG peut par exemple être enregistrée par un utilisateur, afin de choisir le degré de précision de notification d'accès illégale dont il souhaite bénéficier, et en outre sélectivement pour chaque ressource RES du système sur puce SOC.

La valeur de la donnée de paramétrage des notifications ILAC_BUS_CFG peut aussi par exemple être enregistrée par une procédure d'établissement des droits d'accès, usuellement effectuée par le dispositif maître de confiance TDMSTR au démarrage du système sur puce SOC.

Ainsi, le fonctionnement du circuit de protection RISUP de chaque ressource RES est configuré en fonction de la donnée de paramétrage ILAC_BUS_CFG contenue dans l'emplacement respectif « 8 » du registre de configuration.

A cet égard, le circuit de protection RISUP est configuré pour générer le signal de notification ILAC_BUS en cas de blocage d'une transaction adressée à la ressource, si la donnée de paramétrage des notifications ILAC_BUS_CFG pour cette ressource est activée (par exemple à « 1 ») ; et pour ne pas générer le signal de notification ILAC_BUS si la donnée de paramétrage des notifications ILAC_BUS_CFG pour cette ressource est désactivée (par exemple à « 0 »).

En outre, dans le cas où le système d'isolation des ressources RIF comporte l'unité de gestion des accès illégaux centrale IAC, telle que mentionnée précédemment, le registre de configuration CFGREG_RESy peut avantageusement contenir un emplacement « 9 » prévu pour contenir une donnée de paramétrage des interruption ILAC_INTRPT_CFG.

La donnée de paramétrage des interruptions ILAC_INTRPT_CFG permet d'activer ou désactiver (par exemple lorsqu'elle est enregistrée à la valeur « 1 », ou respectivement « 0 ») la fonctionnalité de l'unité de gestion des accès illégaux centrale IAC générant des interruptions ILAC_INTRPT au dispositif maître de confiance TDMSTR, en cas de détection d'accès illégal, et respectivement pour chacune des ressources RES.

La valeur de la donnée de paramétrage des interruptions ILAC_INTRPT_CFG peut par exemple être enregistrée par un utilisateur, afin là-encore de choisir le degré de précision de notification d'accès illégale dont il souhaite bénéficier, et en outre sélectivement pour chaque ressource RES du système sur puce SOC.

Ainsi, le fonctionnement de l'unité de gestion des accès illégaux centrale IAC est configuré spécifiquement pour chaque ressource RES en fonction de la donnée de paramétrage ILAC_INTRPT_CFG contenue dans l'emplacement respectif « 9 » du registre de configuration.

A cet égard, l'unité de gestion des accès illégaux centrale IAC est configurée pour chaque ressource, de manière générer le signal d'interruption ILAC_INTRPT en cas de blocage d'une transaction adressée à la ressource, si la donnée de paramétrage des interruptions ILAC_INTRPT_CFG pour cette ressource est activée (par exemple à « 1 ») ; et pour ne pas générer le signal d'interruption ILAC_INTRPT si la donnée de paramétrage des interruptions ILAC_INTRPT_CFG pour cette ressource est désactivée (par exemple à « 0 »).

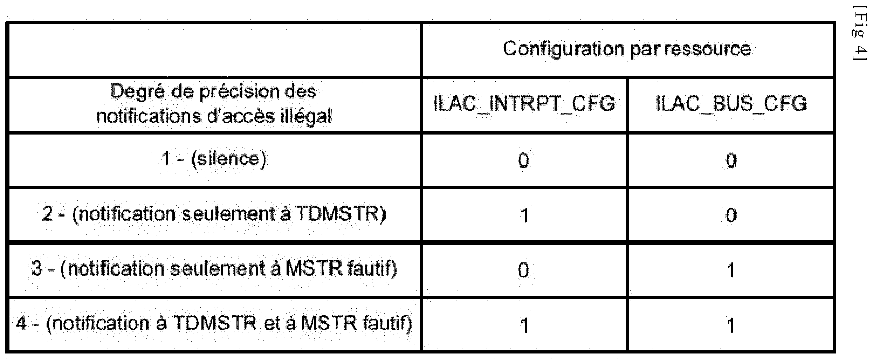

La figure 4 illustre un tableau montrant les possibilités de sélections du degré de précision dans les notifications d'accès illégal, d'un exemple de réalisation du système sur puce SOC décrit précédemment en relation avec les figures 1 à 3.

Les différents degrés de précision des notifications d'accès illégal sont définis pour respectivement chaque ressource, par la configuration de la donnée de paramétrage des notifications ILAC_BUS_CFG et de la donnée de paramétrage des interruptions ILAC_INTRPT_CFG.

Les quatre différents degrés de précision des notifications d'accès illégal sont désignés suivant l'ordre croissant des numéros 1, 2, 3, 4.

Le premier degré « 1 » correspond à un silence en cas d'accès illégal et est défini par la désactivation de la fonctionnalité d'interruption du dispositif maître de confiance TDMSTR, ILAC_INTRPT_CFG = 0, et par la désactivation de la fonctionnalité de notification du dispositif maître fautif MSTR (c'est-à-dire le dispositif maître ayant généré la transaction en cause de l'accès illégal), ILAC_BUS_CFG = 0.

Le deuxième degré « 2 » correspond à une notification seulement au dispositif maître de confiance TDMSTR et est défini par l'activation de la fonctionnalité d'interruption du dispositif maître de confiance TDMSTR, « ILAC_INTRPT_CFG = 1 », et par la désactivation de la fonctionnalité de notification du dispositif maître fautif MSTR, « ILAC_BUS_CFG = 0 ».

Le troisième degré « 3 » correspond à une notification seulement au dispositif maître fautif MSTR et est défini par la désactivation de la fonctionnalité d'interruption du dispositif maître de confiance TDMSTR, « ILAC_INTRPT_CFG = 0 », et par l'activation de la fonctionnalité de notification du dispositif maître fautif MSTR, « ILAC_BUS_CFG = 1 ».

Le quatrième degré « 4 » correspond à une notification à la fois au dispositif maître de confiance TDMSTR et au dispositif maître fautif MSTR, et est défini par l'activation de la fonctionnalité d'interruption du dispositif maître de confiance TDMSTR, « ILAC_INTRPT_CFG = 1 », et par l'activation de la fonctionnalité de notification du dispositif maître fautif MSTR, « ILAC_BUS_CFG = 1 ».

En résumé, le degré de précision particulièrement avantageux dans la détection des accès illégaux, obtenu par le signal de notification ILAC_BUS sur le canal de notification d'erreur du bus RREP, peut être activé ou désactivé en fonction des besoins en matière d'isolation des ressources, par exemple choisis par un utilisateur.

Ce choix peut en outre avantageusement être fait parallèlement à la configuration du signal d'interruption ILAC_INTRPT, sans engendrer de redondance d'information.

Le choix de la configuration du degré de précision des notifications d'accès illégal peut être fait dynamiquement au cours de l'utilisation du système sur puce, par exemple au niveau de précision maximal au cours d'une phase de conception et/ou de débogage d'un programme utilisant les ressources du système sur puce SOC, et à un niveau moindre au cours de l'utilisation finale du système sur puce SOC.

Plus généralement, il est possible de bénéficier d'une grande maîtrise et d'une haute sécurité ou de privilégier la simplicité et/ou la performance, selon la fonctionnalité de la ressource et dynamiquement en fonction de l'utilisation qui faite du système sur puce et de ses ressources.

## Revendications

1. Système sur puce (SOC) comportant au moins un dispositif maître (MSTR), au moins une ressource esclave (RES), un bus d'interconnexion (BUS) comportant un canal de notification d'erreur (RREP), et un système d'isolation des ressources (RIF) comportant, pour chaque ressource, un circuit de protection (RISUP) configuré pour bloquer ou transmettre des transactions adressées à la ressource par le bus d'interconnexion (BUS), en fonction de droits d'accès de la ressource et de la transaction, le circuit de protection (RISUP) étant capable de générer un signal de notification (ILAC_BUS) sur le canal de notification d'erreur (RREP) du bus d'interconnexion (BUS) en cas de blocage d'une transaction.

2. Système sur puce (SOC) selon la revendication 1, dans lequel le circuit de protection (RISUP) est configuré pour adresser ledit signal de notification (ILAC_BUS) au dispositif maître (MSTR) à l'origine de ladite transaction bloquée.

3. Système sur puce (SOC) selon l'une des revendications 1 ou 2, dans lequel le système d'isolation des ressources (RIF) comporte, dans un jeu de registres de configuration (CFGREG), pour chaque ressource un emplacement pour contenir une donnée de paramétrage des notifications (ILAC_BUS_CFG), le circuit de protection (RISUP) de chaque ressource étant configuré pour générer ou non ledit signal de notification (ILAC_BUS) en cas de blocage d'une transaction adressée à la ressource, en fonction de la donnée de paramétrage des notifications (ILAC_BUS_CFG) pour cette ressource.

4. Système sur puce (SOC) selon l'une des revendications 1 à 3, comportant un dispositif maître de confiance (TDMSTR), dans lequel le système d'isolation des ressources (RIF) comporte une unité de gestion centrale (IAC) capable de générer un signal d'interruption (ILAC_INTRPT) adressé au dispositif maître de confiance (TDMSTR), en cas de blocage d'une transaction par l'un quelconque dudit au moins un circuit de protection (RISUP).

5. Système sur puce (SOC) selon la revendication 4, dans lequel le système d'isolation des ressources (RIF) comporte, dans un jeu de registres de configuration (CFGREG), pour chaque ressource, un emplacement prévu pour contenir une donnée de paramétrage des interruptions (ILAC_INTRPT_CFG), l'unité de gestion centrale (IAC) étant configurée pour générer ou non ledit signal d'interruption (ILAC_INTRPT) en cas de blocage d'une transaction adressée à une ressource, en fonction de la donnée de paramétrage des interruptions (ILAC_INTRPT_CFG) pour cette ressource.

6. Procédé de gestion de l'isolation de ressources d'un système sur puce (SOC), dans lequel :
- le système sur puce (SOC) comprend au moins un dispositif maître (MSTR), au moins une ressource esclave (RES), et un bus d'interconnexion (BUS) comportant un canal de notification d'erreur (RREP) ; et
- le procédé comprend, pour chaque ressource, une mise en oeuvre d'une protection (RISUP) comprenant un blocage ou une transmission de transactions adressées à la ressource par le bus d'interconnexion (BUS), en fonction de droits d'accès de la ressource et de la transaction, et une génération d'un signal de notification (ILAC_BUS) sur le canal de notification d'erreur (RREP) du bus d'interconnexion (BUS) en cas de blocage d'une transaction.

7. Procédé selon la revendication 6, dans lequel ledit signal de notification (ILAC_BUS) est adressé au dispositif maître (MSTR) à l'origine de ladite transaction bloquée.

8. Procédé selon l'une des revendications 6 ou 7, dans lequel une donnée de paramétrage des notifications (ILAC_BUS_CFG), pour chaque ressource, est contenue dans un jeu de registres de configuration (CFGREG), et ledit signal de notification (ILAC_BUS) est généré ou non en cas de blocage d'une transaction adressée à une ressource, en fonction de la donnée de paramétrage des notifications (ILAC_BUS_CFG) pour cette ressource.

9. Procédé selon l'une des revendications 6 à 8, dans lequel le système sur puce (SOC) comporte un dispositif maître de confiance (TDMSTR), et le procédé comprend une génération d'un signal d'interruption (ILAC_INTRPT) adressé au dispositif maître de confiance (TDMSTR), en cas de blocage d'une transaction adressé à l'une quelconque de ladite au moins une ressource.

10. Procédé selon la revendication 9, dans lequel, pour chaque ressource, une donnée de paramétrage des interruptions (ILAC_INTRPT_CFG) est contenue dans un jeu de registres de configuration (CFGREG), et ledit signal d'interruption (ILAC_INTRPT) est généré ou non en cas de blocage d'une transaction adressée à une ressource, en fonction de la donnée de paramétrage des interruptions (ILAC_INTRPT_CFG) pour cette ressource.
